# EUROPEAN PATENT APPLICATION

(11) **EP 4 283 972 A1**
(43) Date of publication of application: **29.11.2023**
(21) Application number: 21921381.6
(22) Date of filing: 28.12.2021
(51) Int. Cl.: H04N 5/232, G02B 7/28, G03B 7/091, G03B 15/00, H04N 7/18

(54) **IMAGING DEVICE, IMAGING CONTROL METHOD, AND PROGRAM**

(30) Priority: 25.01.2021 JP 2021009683
(71) Applicant: Sony Group Corporation, Tokyo 108-0075 (JP)
(72) Inventor: SATO, Takahiro, Tokyo 108-0075 (JP); KIMISHIMA, Yu, Tokyo 108-0075 (JP); TAKADA, Yohei, Tokyo 108-0075 (JP); HOSOKAWA, Takayuki, Tokyo 108-0075 (JP); FUKUDA, Akira, Tokyo 108-0075 (JP); NAKAMURA, Eiji, Tokyo 108-0075 (JP); NAKAGAWA, Terutoshi, Tokyo 108-0075 (JP); KURAHASHI, Makoto, Tokyo 108-0075 (JP); YOSHIMOTO, Akiko, Tokyo 108-0075 (JP)
(74) Representative: 2SPL Patentanwälte PartG mbB
(86) International application number: PCT/JP2021/048960
(87) International publication number: WO 2022/158280

(57) **Abstract**

The technology relates to an imaging apparatus, an imaging control method, and a program for resuming tracking from an appropriate position at an end of tracking.

The imaging apparatus includes a focus control section configured to control a tracking function of tracking a tracking target and keeping the tracking target in focus, and a setting section configured to move a tracking start position during tracking on the basis of a predetermined condition. The technology may be applied, for example, to the imaging apparatus having the tracking function.

## Description

### [Technical Field]

The present technology relates to an imaging apparatus, an imaging control method, and a program. More particularly, the technology relates to an imaging apparatus, an imaging control method, and a program for tracking a subject.

### [Background Art]

Recent years have witnessed the widespread use of an imaging apparatus having a function of following (i.e., tracking) a subject including a tracking target while keeping the tracking target in focus.

Also, there has been proposed an imaging apparatus that stores a tracking start position by moving a tracking start frame before tracking and, at the end of tracking, resumes tracking from the tracking start position stored before tracking. For example, in the case where the tracking target is lost as when it is hidden behind another subject during tracking, tracking is resumed from the tracking start position stored before tracking (e.g., see PTL 1).

### [Citation List]

### [Patent Literature]

[PTL 1]
Japanese Patent Laid-Open No. 2019-22116

### [Summary]

### [Technical Problem]

According to the invention described in PTL 1, however, in the case where the hidden tracking target reappears in a position away from the stored tracking start position, it is difficult to immediately bring the tracking target into focus and resume tracking.

The present technology has been devised in view of the above circumstances and aims to resume tracking from an appropriate position at the end of tracking.

### [Solution to Problem]

According to one aspect of the present technology, there is provided an imaging apparatus including a focus control section configured to control a tracking function of tracking a tracking target and keeping the tracking target in focus, and a setting section configured to move a tracking start position during tracking on the basis of a predetermined condition.

According to another aspect of the present technology, there is provided an imaging control method including controlling a tracking function of tracking a tracking target and keeping the tracking target in focus, and moving a tracking start position during tracking on the basis of a predetermined condition.

According to a further aspect of the present technology, there is provided a program for causing a computer to execute a process including controlling a tracking function of tracking a tracking target and keeping the tracking target in focus, and moving a tracking start position during tracking on the basis of a predetermined condition.

Thus, according to some aspects of the present technology, a tracking function of tracking a tracking target and keeping the tracking target in focus is controlled. A tracking start position is moved during tracking on the basis of a predetermined condition.

### [Brief Description of Drawings]

[FIG. 1]

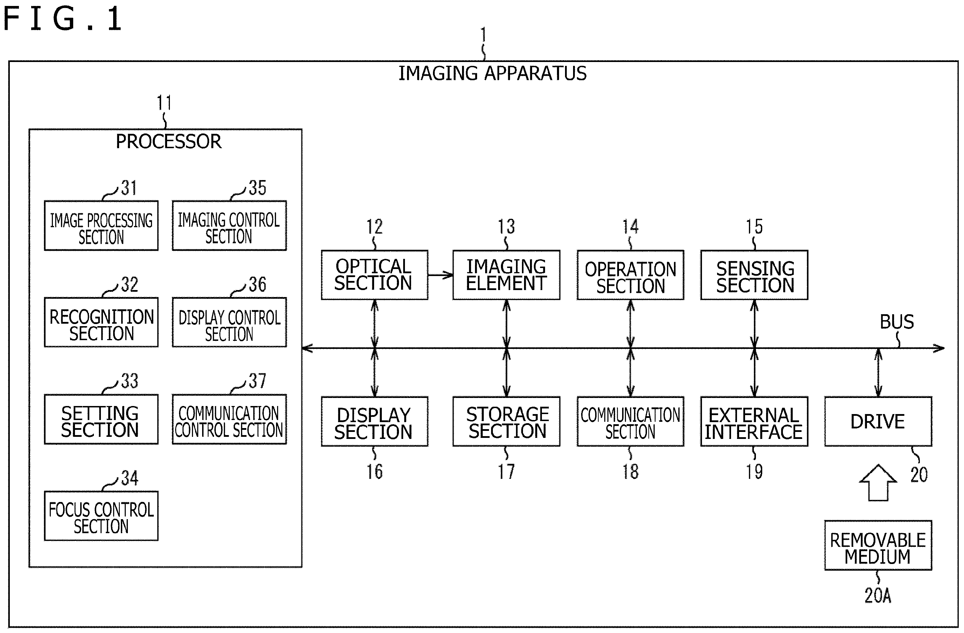

   FIG. 1 is a block diagram depicting an embodiment of an imaging apparatus to which the present technology is applied.
[FIG. 2]

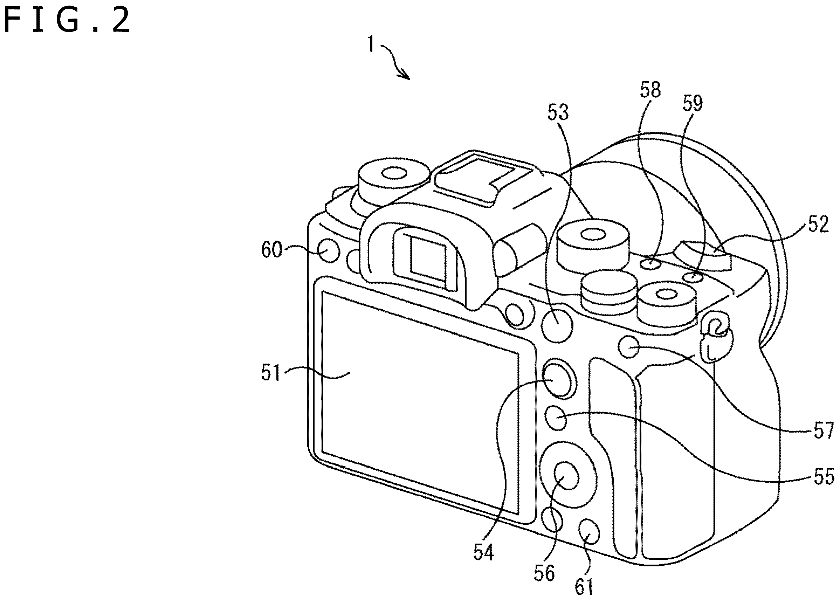

   FIG. 2 is a perspective view of the imaging apparatus as seen from the back.
[FIG. 3]

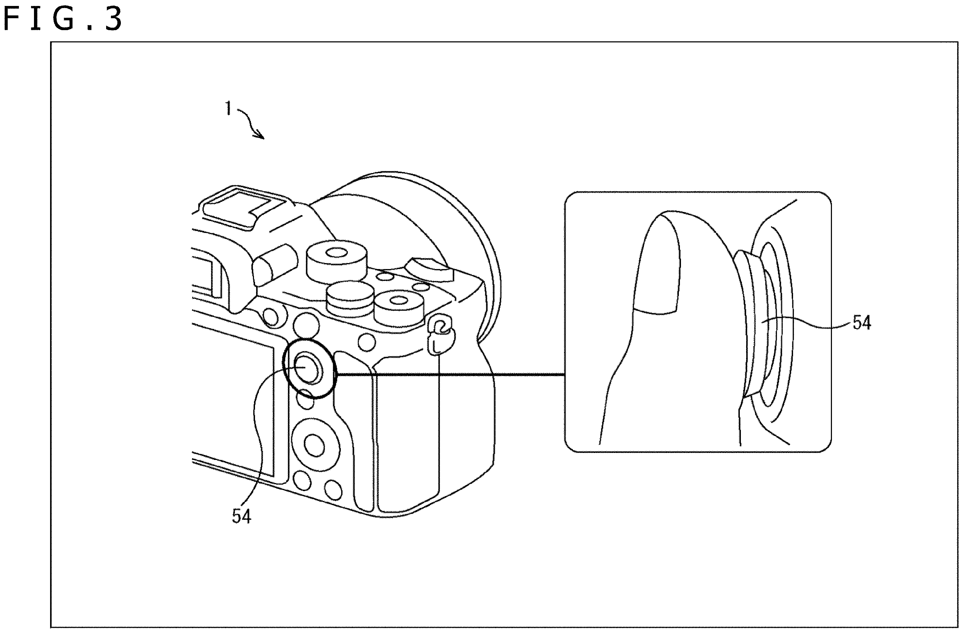

   FIG. 3 is an enlarged view of a multi-selector of the imaging apparatus.
[FIG. 4]

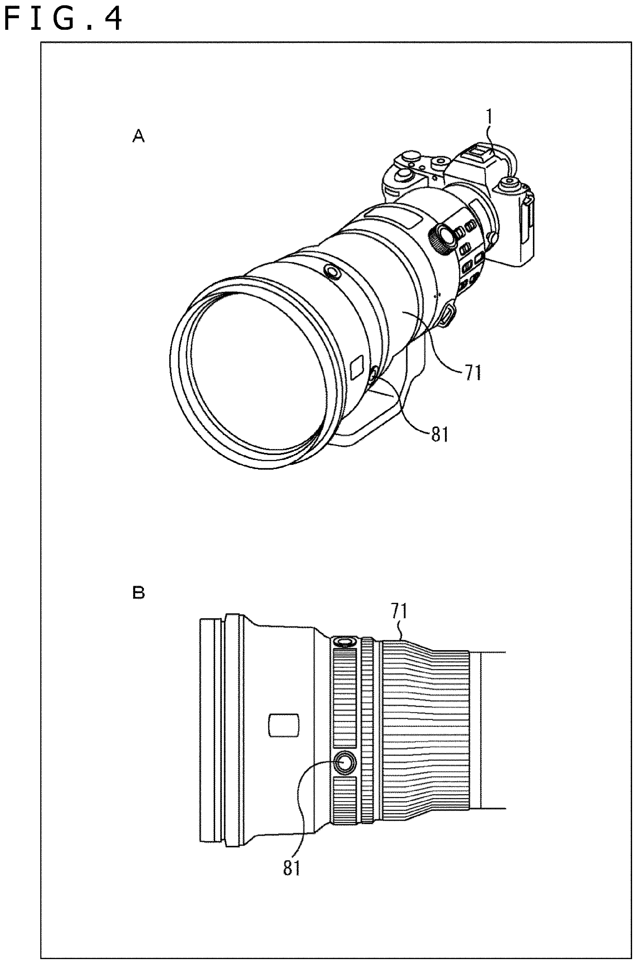

   FIG. 4 depicts perspective views of the imaging apparatus equipped with a lens unit as seen from the front, and a side view of a tip end part of the lens unit.
[FIG. 5]

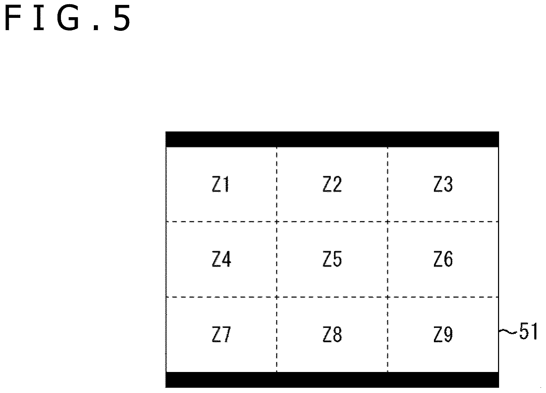

   FIG. 5 is a diagram depicting an example of focus area zones.
[FIG. 6]

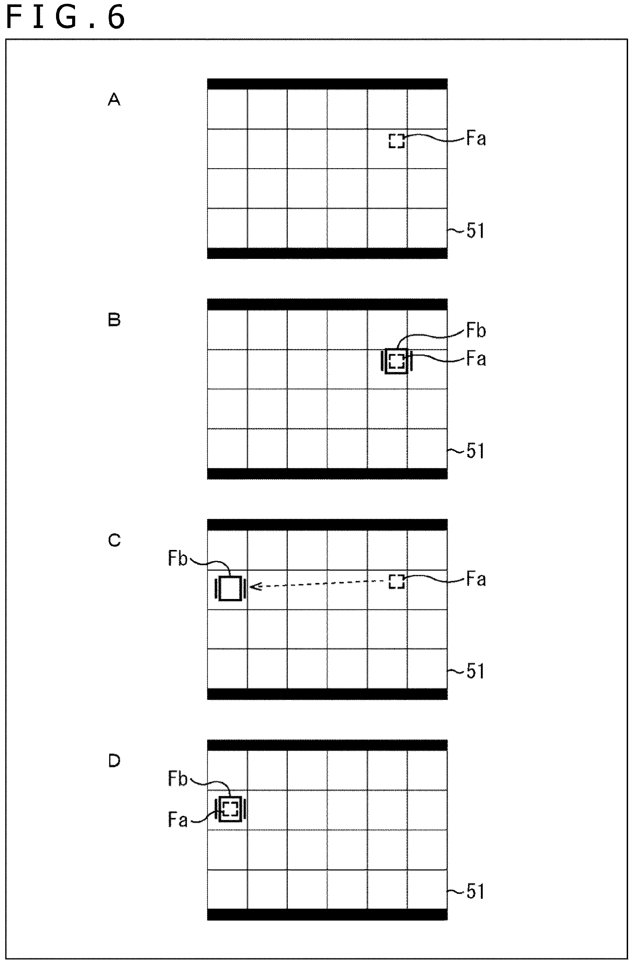

   FIG. 6 depicts views for explaining a first example of a method of moving a tracking start position.
[FIG. 7]

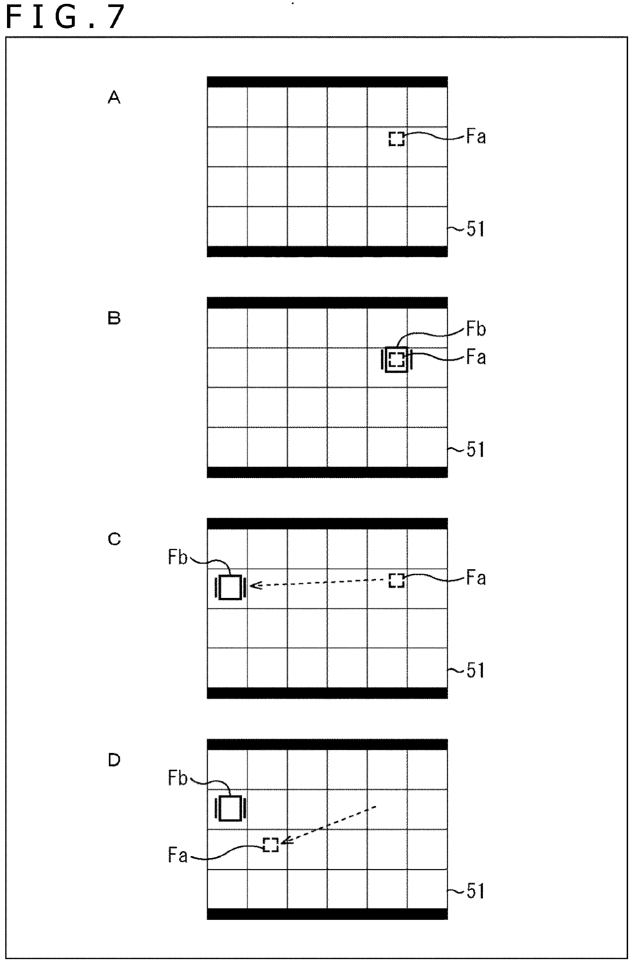

   FIG. 7 depicts views for explaining a second example of the method of moving the tracking start position.
[FIG. 8]

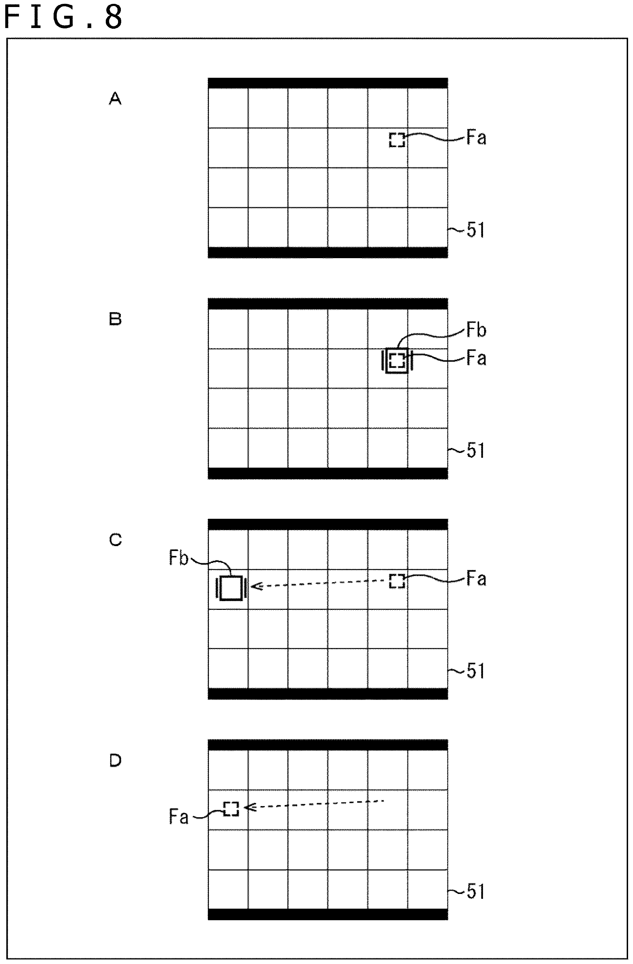

   FIG. 8 depicts views for explaining a third example of the method of moving the tracking start position.
[FIG. 9]

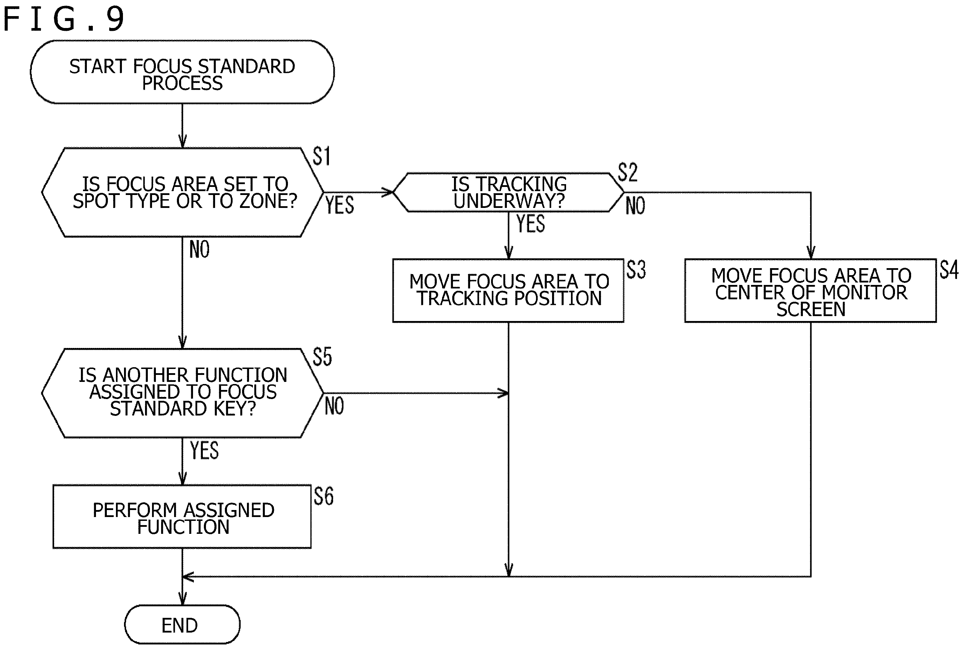

   FIG. 9 is a flowchart for explaining a focus standard process.
[FIG. 10]

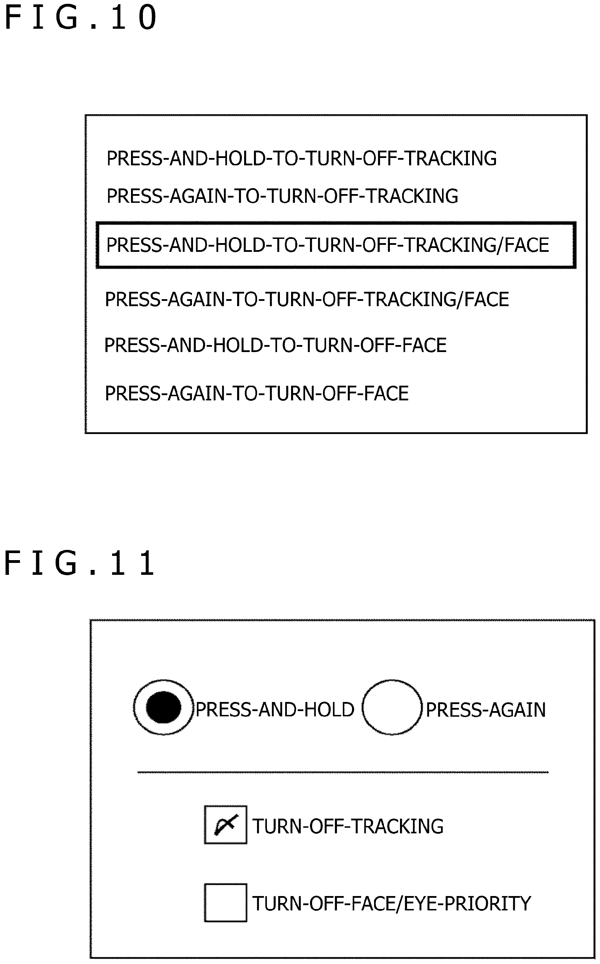

   FIG. 10 is a view depicting a first example of a screen for setting a press-and-hold-to-turn-off function.
[FIG. 11]
   FIG. 11 is a view depicting a second example of the screen for setting the press-and-hold-to-turn-off function.
[FIG. 12]

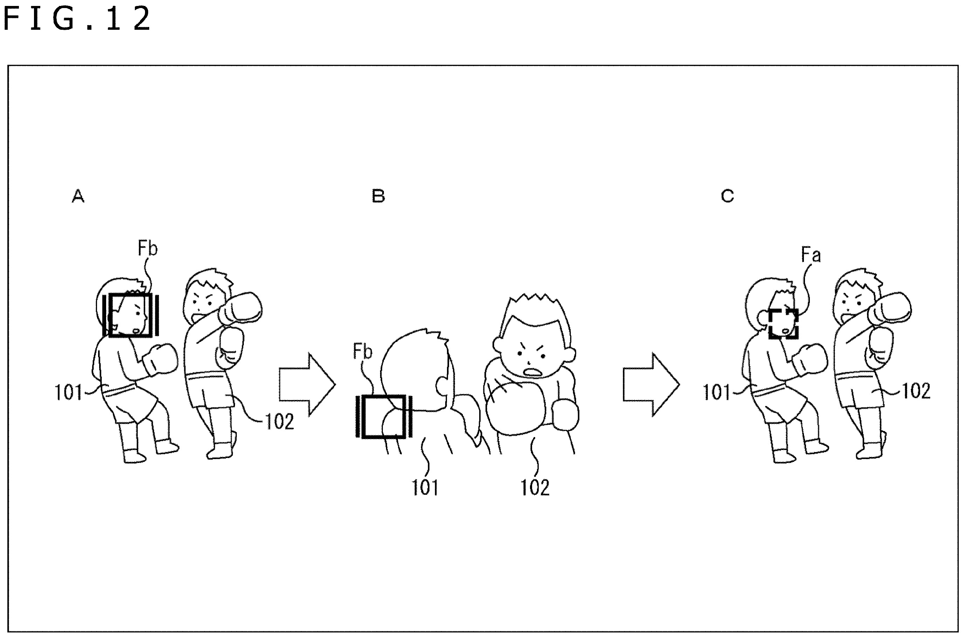

   FIG. 12 depicts views for explaining a first example of a method of setting a tracking position when tracking fails.
[FIG. 13]

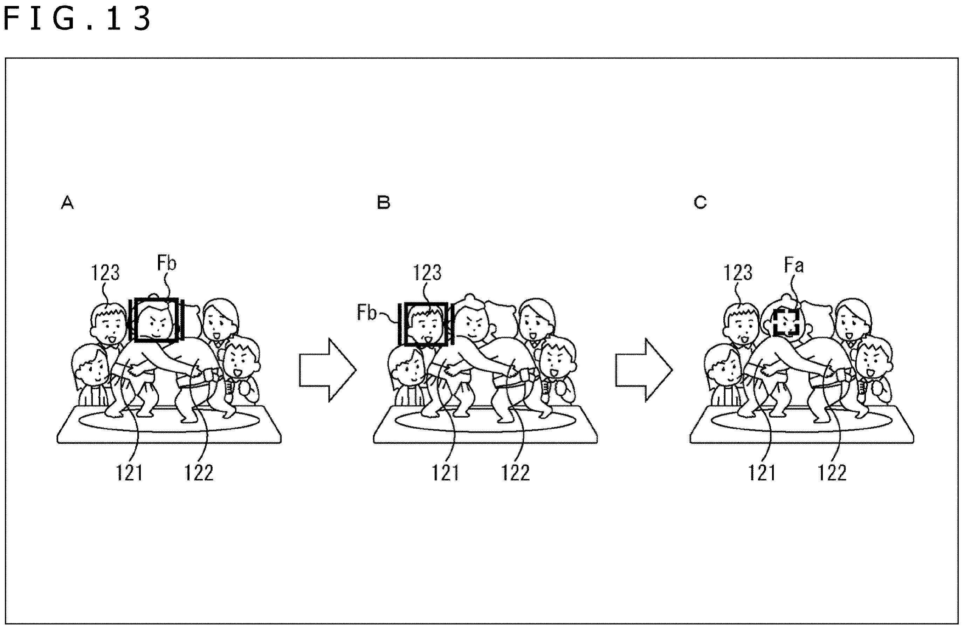

   FIG. 13 depicts views for explaining a second example of the method of setting the tracking position when tracking fails.
[FIG. 14]

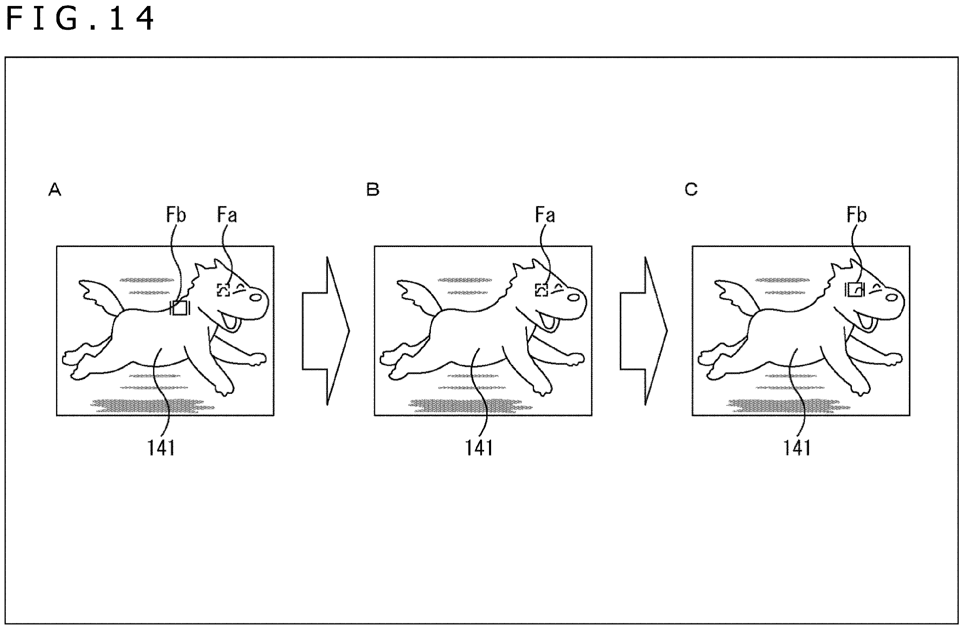

   FIG. 14 depicts views for explaining a third example of the method of setting the tracking position when tracking fails.

### [Description of Embodiment]

An embodiment for implementing the present technology are described below. The description will be made in the following order:
1. Embodiment
2. Modification
3. Others

### <<1. Embodiment>>

An embodiment for implementing the present technology are explained below with reference to FIGS. 1 through 14.

### <Configuration Example of Imaging Apparatus 1>

FIG. 1 is a block diagram depicting an embodiment of an imaging apparatus 1 to which the present technology is applied.

The imaging apparatus 1 includes a processor 11, an optical section 12, an imaging element 13, an operation section 14, a sensing section 15, a display section 16, a storage section 17, a communication section 18, an external interface (I/F) 19, and a drive 20. The components ranging from the processor 11 to the drive 20 are connected with a bus to perform necessary communication therebetween.

The processor 11 includes a CPU (Central Processing Unit), an MPU (Micro Processing Unit), or a GPU (Graphics Processing Unit), for example. The processor 11 performs various processes by executing programs installed in the storage section 17.

The optical section 12 includes optical elements such as lenses. The optical section 12 forms an image of incident light from a subject onto a light-receiving surface of the imaging element 13.

The imaging element 13 includes a CMOS image sensor, for example. The imaging element 13 captures an image of the subject formed by the optical section 12 and outputs image data thus obtained onto the bus.

The operation section 14 includes physical keys (including a keyboard), a mouse, and a touch panel, for example. In response to operations performs by a user, the operation section 14 outputs operation signals corresponding to the operations onto the bus.

The sensing section 15 includes various sensors, and outputs sensor data from each of the sensors onto the bus. For example, the sensing section 15 includes sensors for detecting movement of the imaging apparatus 1, such as an acceleration sensor, an angular velocity sensor, a geomagnetic sensor, and a GNSS (Global Navigation Satellite System) receiver.

The display section 16 includes a touch panel, for example, and displays images according to the data supplied from the bus.

Here, the touch panel acting as the operation section 14 may be configured by use of transparent members integrated with the display section 16. Thus configured, the operation section 14 allows the user to input information by operating icons, buttons, and the like displayed on the display section 16.

The storage section 17 includes, for example, a volatile memory that temporarily stores the programs executed by the processor 11 as well as the data required thereby. The storage section 17 also includes, for example, a hard disk or a nonvolatile memory that stores the programs for execution by the processor 11 and the data required thereby.

The communication section 18 includes communication circuits, an antenna, and the like for communicating with various external devices.

The external I/F 19 is an interface that exchanges data with various external devices.

The drive 20 allows a removable medium 20A such as a memory card to be attached thereto and detached therefrom. The drive 20 drives a piece of the removable medium 20A attached thereto.

In the imaging apparatus 1 configured as described above, the programs to be executed by the processor 11 may be recorded beforehand in the storage section 17.

The programs may alternatively be stored (recorded) on the removable medium 20A in the form of generallycalled packaged software, which can be installed from the removable medium 20A into the imaging apparatus 1.

As another alternative, the programs may be downloaded from a server, not depicted, via the communication section 18 and installed into the imaging apparatus 1.

The processor 11 implements an image processing section 31, a recognition section 32, a setting section 33, a focus control section 34, an imaging control section 35, a display control section 36, and a communication control section 37 by executing the relevant programs installed in the imaging apparatus 1.

The image processing section 31 performs various kinds of image processing (e.g., noise removal) on the image data obtained by the imaging element 13. The image processing section 31 outputs the image data thus processed onto the bus.

The recognition section 32 performs the process of recognizing various subjects inside an image based on the image data having undergone the image processing performed by the image processing section 31. For example, the recognition section 32 recognizes the types, the positions, the movements, and the like of the subjects within the image.

The setting section 33 performs various setting processes for the imaging apparatus 1 based on the operation signals from the operation section 14 and on the results of the subject recognition process performed by the recognition section 32. For example, at the time of executing a tracking function of tracking a focused subject (tracking target) and keeping the subject in focus, the setting section 33 performs, among others, the process of setting a tracking start position serving as a reference position for starting a tracking session.

The focus control section 34 performs focus control of the imaging apparatus 1 by controlling the optical section 12 based on the status of the imaging apparatus 1 set by the setting section 33 and on the operation signals from the operation section 14. For example, the focus control section 34 performs AF (Auto Focus) for automatically focusing on a subject within an angle of view, and controls the above-mentioned tracking function.

The imaging control section 35 controls imaging of the subject by performing control of the optical section 12 and the imaging element 13 based on the status of the imaging apparatus 1 set by the setting section 33 and on the operation signals from the operation section 14.

The display control section 36 performs display control of the display section 16. For example, the display control section 36 controls the display section 16 displaying through-images based on the image data obtained by the imaging element 13 and processed by the image processing section 31, images based on the image data stored in the storage section 17 or on the removable medium 20A, and various setting screens.

The communication control section 37 controls communication performed by the communication section 18.

### <Operating Members for AF and Tracking Function>

Explained next with reference to FIGS. 2 through 4 are the operating members included in the operation section 14 for use in operating AF and the tracking function of the imaging apparatus 1.

FIG. 2 is a perspective view of the imaging apparatus 1 as seen from the back. FIG. 3 is an enlarged view of a multi-selector 54 of the imaging apparatus 1. FIG. 4 includes a perspective view of the imaging apparatus 1 equipped with a lens unit 71 as seen from the front, and a side view of a tip end part of the lens unit 71.

The imaging apparatus 1 includes a monitor 51, a shutter button 52, an AF button 53, the multi-selector 54, a function button 55, a control wheel 56, an AEL button 57, and custom buttons 58 through 61. The lens unit 71 includes a lens button 81.

The monitor 51 is disposed in the back bottom left of the imaging apparatus 1. The monitor 51 may be configured with a touch panel, for example, and includes part of the operation section 14 and display section 16. For example, the monitor 51 displays through-images based on the image data obtained by the imaging element 13 and processed by the image processing section 31, images based on the image data stored in the storage section 17 or on the removable medium 20A, and various setting screens.

Also, the user may perform various operations on the monitor 51 serving as a touch panel. For example, the user may touch the monitor 51 to move a focus area frame to the touched position.

Here, the focus area, to be explained later in detail, is an area including the target on which AF is performed. The focus area frame is a frame displayed on the monitor 51 to indicate the focus area.

The shutter button 52 is disposed in the right front corner on the top surface of the imaging apparatus 1. The shutter button 52 is capable of being half-pressed or fully pressed. Half-pressing the shutter button 52 causes AF to be executed. In the case where the tracking function is set to ON, half-pressing the shutter button 52 activates the tracking function. Fully pressing the shutter button 52 causes a still image or a video to be taken. The image data thus obtained is stored into the storage section 17 or onto the removable medium 20A.

The AF button 53 is disposed near the top right corner of the monitor 51 at the back of the imaging apparatus 1. Pressing the AF button 53 causes AF to be performed. In the case where the tracking function is set to ON, pressing the AF button 53 activates the tracking function.

The multi-selector 54 is disposed on the right of the monitor 51 below the AF button 53. As depicted in FIG. 3, the multi-selector 54 includes a lever-like button which may be pressed at its center or tilted up, down, right, or left.

For example, a focus standard function is assigned to the center of the multi-selector 54. The focus standard function is a function that moves the focus area when, for example, a button to which the focus standard is assigned is simply pressed. As another example, tilting the multi-selector 54 up, down, right, or left moves accordingly the focus area frame being displayed on the monitor 51.

The function button 55 is disposed on the right of the monitor 51 below the multi-selector 54. The function button 55 is used in the case where a function menu is to be displayed, for example.

The control wheel 56 is disposed on the right of the monitor 51 below the function button 55. With the control wheel 56, a center button may be pressed, a perimeter wheel may be rotated, or the wheel may be pressed on the top, the down, the right, or the left edge. For example, the control wheel 56 may be used to operate various menus displayed on the monitor 51.

The AEL button 57 is disposed near the top right corner of the imaging apparatus 1. The AEL button is used to operate an AE (automatic exposure) lock function, for example.

The custom buttons 58 and 59 are juxtaposed right and left behind the shutter button 52 on the top surface of the imaging apparatus 1.

The custom button 60 is disposed near the top left corner of the monitor 51 at the back of the imaging apparatus 1.

The custom button 61 is disposed near the top right corner at the back of the imaging apparatus 1.

The lens button 81 (see FIG. 4) is disposed a little behind the top end of the lens unit 71 in a slightly lower part of the left side surface thereof.

The custom buttons 58 through 61 and the lens button 81 are not assigned specific uses; the user may assign desired functions to these buttons. Also, the user may assign functions other than those already assigned to the AF button 53, to the center of the multi-selector 54, to the function button 55, to the center button of the control wheel 56; to the left, right, and down edges of the wheel of the control wheel 56; and to the AEL button 57 .

In the description that follows, the buttons to which the user may assign desired functions will be referred to as the custom keys. For example, the user may assign the focus standard function or a press-and-hold-to-turn-off function, to be discussed later, to any one of the custom keys.

In the ensuing description, the custom key to which the fucus standard function is assigned will be referred to as the focus standard key. Also, the custom key to which the press-and-hold-to-turn-off function is assigned will be referred to as the press-and-hold-to-turn-off key.

### <AF Function of Imaging Apparatus 1>

The AF function of the imaging apparatus 1 is explained next in detail.

### <Focus Modes>

For example, the imaging apparatus 1 is provided with four focus modes including single AF (Auto Focus), continuous AF (Auto Focus), DMF (Direct Manual Focus), and MF (Manual Focus).

The single AF mode is a mode in which a subject in the focus area is automatically brought into focus and the point of focus is fixed when the subject is in focus.

The continuous AF mode is a mode in which the subject is kept in focus during AF operation (e.g., while the shutter button 52 is half-pressed or while the AF button 53 is pressed). In the continuous AF mode, for example, the point of focus is moved in keeping with the movement of the subject in focus.

In the case where the focus mode is set to the continuous AF mode, the tracking function can be used. When the tracking function is set to ON, the tracking target is tracked and kept in focus. Incidentally, in the case where the tracking function is set to OFF even though the focus mode is set to the continuous AF mode, the focus is moved, for example, to a different subject if such a subject appears in a position closer than the currently focused subject.

The DMF mode is a mode in which, after the subject is brought into focus by AF, the user can manually finetune the point of focus.

The MF mode is a mode in which focusing is performed manually.

### <Focus Areas>

For example, the imaging apparatus 1 may be set for any one of five focus areas including wide, zone, center, flexible spot, and extended flexible spot.

In the case where the focus area is set to wide, the entire display range of the monitor 51 is set as the focus area. AF is then performed on an imaging range corresponding to the entire display range of the monitor 51.

In the case where the focus area is set to zone, the display range of the monitor 51 (e.g., imaging range (angle of view)) is divided, for example, into zones Z1 through Z9 as depicted in FIG. 5. Of the divided zones, the one designated by the user is set as the focus area. AF is then performed on the imaging range corresponding to the designated zone. Incidentally, in the case where focusing fails inside the designated zone, the entire display range of the monitor 51 is set as the focus area.

In the case where the focus area is set to center, the center and its vicinity of the monitor 51 are set as the focus area. AF is then performed on the imaging range corresponding to the center and its vicinity of the monitor 51. Incidentally, in the case where focusing fails at the center and its vicinity of the monitor 51, the entire display range of the monitor 51 is set as the focus area.

In the case where the focus area is set to flexible spot, the focus area frame is displayed on the monitor 51. The user can move the focus area frame to a desired position inside the monitor 51. With the inside of the focus area frame set as the focus area, AF is performed on the imaging range corresponding to the focus area frame. Incidentally, in the case where focusing fails inside the focus area frame, the entire display range of the monitor 51 is set as the focus area.

In the case where the focus area is set to extended flexible spot, as in the case where the focus area is set to flexible spot, the focus area frame is displayed on the monitor 51. The user can then move the focus area frame to a desired position on the monitor 51. With the inside of the focus area frame set as the focus area, AF is performed on the imaging range corresponding to the focus area frame. In the case where focusing fails inside the focus area frame, a predetermined range around the focus area frame is set as the focus area. AF is then performed on the imaging range corresponding to the predetermined range around the focus area frame. Incidentally, in the case where focusing fails inside the predetermined range around the focus area frame, the entire display range of the monitor 51 is set as the focus area.

Incidentally, in the case where the tracking function is set to ON, the point of focus is moved in keeping with the movement of the tracking target after the tracking target is brought into focus regardless of the focus area setting.

In the description that follows, the flexible spot and the extended flexible spot will be collectively referred to as the spot type.

### <Face/Eye-Priority-in-AF Function>

The face/eye-priority-in-AF function is a function that prioritizes focusing on a face or an eye in the focus area.

For example, in the case where the face/eye priority-in-AF function is set to ON and where an eye is recognized in the focus area, the recognized eye is brought into focus. Incidentally, in the case where multiple eyes are recognized, one of them is brought into focus on the basis of predetermined conditions.

In the case where no eyes are recognized in the focus area and where a face is recognized, the recognized face is brought into focus. Incidentally, in the case where multiple faces are recognized, one of them is brought into focus on the basis of predetermined conditions.

Incidentally, in the case where neither eyes nor faces are recognized in the focus area, normal AF is performed inside the focus area.

### <Method of Setting Tracking Start Position>

In the case where the focus area is set to zone or to spot type on the imaging apparatus 1 and where the tracking function is set to ON, a tracking start position can be set. The tracking start position is a position at which a subject is brought into focus at the start of tracking and from which tracking is started. The tracking start position can be set before or during tracking.

Explained below with reference to FIGS. 6 through 8 are examples of the method of setting the tracking start position. FIGS. 6 through 8 depict examples in the case where the focus area is set to spot type. Furthermore, it is assumed that in FIGS. 6 through 8, a through-image (not depicted) is displayed on the monitor 51 and that a focus area frame Fa and a focus frame Fb are displayed overlaid on the through-image.

FIG. 6 depicts an example of allowing the tracking start position to be set to the tracking position, which is a position at which the tracking target is kept in focus during tracking.

View A in FIG. 6 depicts a display example of the monitor 51 before tracking. The monitor 51 displays the focus area frame Fa. For example, the user may move the focus area frame Fa to a desired position inside the monitor 51 by using the multi-selector 54 or by touching the monitor 51.

Here, in the case where the tracking function is set to ON, the focus area frame Fa indicates both the target area on which AF is performed and the tracking start position. That is, at the time of AF operation, with a subject inside the focus area frame Fa brought into focus, the subject in focus is set as the tracking target, and the point of focus is moved according to the movement of the tracking target.

The setting section 33 then sets the position of the focus area frame Fa as the tracking start position.

View B in FIG. 6 depicts a display example of the monitor 51 at the start of tracking. For example, the subject inside the focus area frame Fa is brought into focus, and the focus frame Fb indicative of the in-focus position is displayed. At this time, for example, the focus area frame Fa remains displayed.

View C in FIG. 6 depicts a display example of the monitor 51 during tracking. For example, the focus frame Fb is moved in keeping with the movement of the tracking target. Thus, the focus frame Fb indicates the tracking position which is a position to which the point of focus is moved in keeping with the movement of the tracking target. At this time, the focus area frame Fa does not move and stays at the same position.

View D in FIG. 6 depicts a display example of the monitor 51 in the case where the user performs a predetermined operation during tracking (e.g., when the user presses the focus standard key). At this time, the focus area frame Fa is moved to the position of the focus frame Fb when the user has performed the predetermined operation. The setting section 33 then sets the position at which the focus area frame Fa is displayed as the tracking start position.

In such a manner, during tracking, the user can easily move to the current tracking position the position serving as the reference from which to resume tracking (tracking start position) at the end of tracking.

On the other hand, in the case where the focus area is set to zone and where the user performs a predetermined operation during tracking (e.g., when the user presses the focus standard key), the focus area is moved to the zone in which the center of the focus frame Fb is present. In the example in FIG. 6, the center of the focus frame Fb when the user has performed the predetermined operation is found in a zone Z4 in FIG. 5, so that the focus area is moved to the zone Z4. The setting section 33 thus sets the zone Z4 as the tracking start position.

In such a manner, during tracking, the user can easily move the reference position from which to resume tracking (tracking start position) at the end of tracking to the zone that includes the current tracking position.

FIG. 7 depicts an example of allowing the tracking start position to be set at a desired position during tracking.

Views A through C in FIG. 7 depict examples similar to those in Views A through C in FIG. 6 and thus will not be discussed further.

For example, during tracking, the user can move the focus area frame Fa to any position inside the monitor 51 by using the multi-selector 54 or by touching the monitor 51. For example, as depicted in View D in FIG. 7, the user can move the focus area frame Fa to a position different from that of the focus frame Fb. The setting section 33 then sets the position of the focus area frame Fa as the tracking start position.

In such a manner, during tracking, the user can easily move the reference position from which to resume tracking (tracking start position) at the end of tracking to the designated position.

On the other hand, in the case where the focus area is set to zone and where tracking is underway, the user can move the focus area in units of a zone indicated in FIG. 5 by using the multi-selector 54 or by touching the monitor 51. The setting section 33 then sets the userdesignated zone as the tracking start position.

In such a manner, during tracking, the user can easily move the reference position from which to resume tracking (tracking start position) at the end of tracking to the designated zone.

FIG. 8 depicts an example of allowing the tracking start position to be automatically moved to the tracking position at the end of tracking.

Views A through C in FIG. 8 depict examples similar to those in Views A through C in FIG. 6 and thus will not be discussed further.

View D in FIG. 8 depicts a display example of the monitor 51 at the end of tracking. For example, in the state indicated in View C in FIG. 8, the focus control section 34 terminates tracking in the case where the tracking target is lost, where focusing fails, or where AF is set to OFF. At this time, as depicted in View D in FIG. 8, the focus frame Fb disappears, and the focus area frame Fa is moved to the position at which the focus frame Fb has been displayed at the end of tracking. The setting section 33 then sets the position at which the focus area frame Fa is displayed as the tracking start position.

In such a manner, the reference position from which to resume tracking at the end of tracking (tracking start position) is automatically moved to the tracking position at the end of tracking.

On the other hand, in the case where the focus area is set to zone, the focus area is moved to the zone in which the center of the focus frame Fb is present at the end of tracking. In the example of FIG. 8, the center of the focus frame Fb at the end of tracking is found inside the zone Z4 in FIG. 5, so that the focus area is moved to the zone Z4. The setting section 33 then sets the zone Z4 as the tracking start position.

In such a manner, the reference position from which to resume tracking at the end of tracking (tracking start position) is automatically moved to the zone that includes the tracking position at the end of tracking.

Incidentally, the user may turn on or off beforehand the function of automatically moving the tracking start position to the tracking position at the end of tracking.

With the setting method in FIG. 8, the setting section 33 may control movement of the tracking start position at the end of tracking on the basis of the type of the subject recognized by the recognition section 32, for example. Specifically, the setting section 33 may control movement of the tracking start position at the end of tracking at least one of a condition that the subject of a predetermined type is recognized by the recognition section 32 and a condition that no subject of a predetermined type is recognized by the recognition section 32.

For example, in the case where a subject of the predetermined type is recognized at the end of tracking by the recognition section 32, the setting section 33 moves the tracking start position to the tracking position. Alternatively, in the case where no subject of the predetermined type is recognized at the end of tracking by the recognition section 32, the setting section 33 moves the tracking start position to the tracking position. As another alternative, in the case where a subject of a first type is recognized at the end of tracking by the recognition section 32 or where no subject of a second type is recognized at the end of tracking by the recognition section 32, the setting section 33 moves the tracking start position to the tracking position.

Incidentally, the user may turn on or off beforehand the function of controlling movement of the tracking start position at the end of tracking on the basis of the type of a recognized subject.

Furthermore, The subject type including the condition for this function may presumably be a person, an animal, a bird, or a vehicle, for example. The subject type may preferably be expanded to include a minute part of an object (person's face, animal's eye, etc.).

Furthermore, the subject type making up the condition for this function may be set by the user. For example, the user may select, from among multiple candidates, the subject type including the condition for this function.

As another alternative, the setting method of FIG. 6 and that of FIG. 7 may be combined. For example, during tracking, the user may move the tracking start position to the tracking position by pressing the focus standard key (e.g., center of the multi-selector 54). As a further alternative, the user may move the tracking start position to a designated position by tilting the multi-selector 54 up, down, right, or left or by touching the monitor 51.

On the other hand, the setting method of FIG. 6 or 7 and that of FIG. 8 cannot be combined. The reason for this is that even if the tracking start position is moved during tracking by the setting method of FIG. 6 or 7, the setting method of FIG. 8 automatically moves the tracking start position to the tracking position at the end of tracking.

In contrast, the user may preferably set a method for turning on any one of the setting methods of FIGS. 6 through 8. In this case, arrangements are made so that the user may turn on the setting method of FIG. 6 and that of FIG. 7 at the same time but that the user may not simultaneously turn on the setting method of FIG. 6 or 7 and that of FIG. 8.

However, in the case where the setting method of FIG. 8 is used to control movement of the tracking start position at the end of tracking on the basis of the type of the recognized subject, at least one of the setting methods of FIGS. 6 and 7 can be combined with the setting method of FIG. 8.

For example, in the case where a subject of a predetermined type is recognized, the setting method of FIG. 8 becomes effective when the tracking start position is to be moved to the tracking position at the end of tracking with the subject of the predetermined type recognized. On the other hand, at least one of the setting methods of FIGS. 6 and 7 becomes effective when no subject of the predetermined type is recognized.

As another example, in the case where no subject of a predetermined type is recognized, the setting method of FIG. 8 becomes effective when the tracking start position is to be moved to the tracking position at the end of tracking with no subject of the predetermined type recognized. On the other hand, at least one of the setting methods of FIGS. 6 and 7 becomes effective when the subject of the predetermined type is recognized.

In the manner described above, it is possible to move the tracking start position not only before tracking but also during tracking. This makes is possible to resume tracking from a more appropriate position when tracking is resumed at the end of tracking.

Incidentally, if the focus area frame is displayed during tracking in a manner similar to that before tracking as indicated in Views B and C in FIG. 6, there is a possibility that the user may be uncertain whether tracking is not yet start or is currently underway. There is also a possibility that added indications such as frames inside the monitor 51 may obstruct the appearance of the subject.

In view of this, the display control section 36 may change the manner in which to display the focus area frame before and during tracking. For example, during tracking, the display control section 36 may change the color of the focus area frame to an unobtrusive color (e.g., translucent or grey). As another example, during tracking, the display control section 36 may change the shape of the focus area frame.

As a further example, the display control section 36 may stop displaying (i.e., delete the focus area frame) the focus area frame during tracking based on the user setting. In this case, the display control section 36 temporarily displays the focus area frame in the case where the focus area frame (tracking start position) is to be moved during tracking (e.g., if operations are performed to move the focus area frame or if the focus area frame is to be moved to the tracking position at the end of tracking).

### <Focus Standard Process>

Explained next with reference to the flowchart in FIG. 9 is the process carried out when the focus standard key is pressed (i.e., focus standard process).

In step S1, the setting section 33 determines whether the focus area is set to spot type or to zone. If the focus area is determined to be set to spot type or to zone, the process is transferred to step S2.

In strep S2, the setting section 33 determines whether or not tracking is underway. If tracking is determined to be underway, control is transferred to step S3.

In step S3, the setting section 33 moves the focus area to the tracking position. For example, in the case where the focus area is set to spot type, the setting section 33 moves the focus area frame to the current position of the focus frame as described above with reference to FIG. 6. For example, in the case where the focus area is set to zone, the setting section 33 moves the focus area to the zone in which the center of the focus area is currently present.

In such a manner, the user can easily move the focus area, i.e., position from which to resume tracking at the end of tracking, to the tracking position by pressing the focus standard key during tracking.

Thereafter, the focus standard process is terminated.

On the other hand, in the case where tracking is determined to be not underway in step S2, the process is transferred to step S4.

In step S4, the setting section 33 moves the focus area to the center of the monitor 51. In the case where the focus area is set to spot type, for example, the setting section 33 moves the focus area frame to the center of the monitor 51. In the case where the focus area is set to zone, the setting section 33 moves the focus area to zone Z5 in FIG. 5.

In such a manner, in the case where tracking is not underway, the user can move the focus area to the center of the monitor 51 by pressing the focus standard key. Thus, in the case where the tracking is set to ON, the tracking start position is moved to the center of the monitor 51.

Thereafter, the focus standard process is terminated.

On the other hand, in the case where the setting section 33 determines that the focus area is set to wide or to center, the process is transferred to step S5.

In step S5, the setting section 33 determines whether or not another function is assigned to the focus standard key. If another function is determined to be assigned to the focus standard key, the process is transferred to step S6.

In step S6, the imaging apparatus 1 performs the assigned function. For example, in the case where the function of temporarily turning on the tracking function is assigned, the tracking function is set to ON until the focus standard key is pressed again. For example, in the case where the function of temporarily turning on AF is assigned, AF is performed while the focus standard key is pressed and held down.

Thereafter, the focus standard process is terminated.

On the other hand, in the case where it is determined in step S5 that no other function is assigned to the focus standard key, step S5 is skipped and the focus standard process is terminated.

### <Press-and-Hold-to-Turn-Off Function>

The press-and-hold-to-turn-off function is explained next with reference to FIGS. 10 and 11.

The press-and-hold-to-turn-off function is a function that temporarily turns off at least one of the tracking function or the face/eye-priority-in-AF function when a custom key to which the press-and-hold-to-turn-off function is assigned (i.e., press-and-hold-to-turn-off key) is pressed.

FIGS. 10 and 11 depict examples of a press-and-hold-to-turn-off function setting screen displayed on the monitor 51.

The press-and-hold-to-turn-off function is categorized into six varieties by combinations of the operation method with the function to be turned off. Specifically, the press-and-hold-to-turn-off function may be categorized into the following six varieties: press-and-hold-to-turn-off-tracking function, press-again-to-turn-off-tracking function, press-and-hold-to-turn-off-tracking-and-face/eye-priority-in-AF function, press-again-to-turn-off-tracking-and-face/eye-priority-in-AF function, press-and-hold-to-turn-off-face/eye-priority-in-AF function, and press-again-to-turn-off-face/eye-priority-in-AF function.

FIG. 10 depicts an example of a setting screen that displays the above six varieties of the press-and-hold-to-turn-off function in list form.

Specifically, the setting screen displays the following six items: "press-and-hold-to-turn-off-tracking," "press-again-to-turn-off-tracking," "press-and-hold-to-turn-off-tracking/face," "press-again-to-turn-off-tracking/face," "press-and-hold-to-turn-off-face," and "press-again-to-turn-off-face."

In the case where the item "press-and-hold-to-turn-off-tracking" is selected, the press-and-hold-to-turn-off-tracking function is set to ON. In the case where the press-and-hold-to-turn-off-tracking function is set to ON, the tracking function is turned off while the press-and-hold-to-turn-off key is pressed and held down.

In the case where the item "press-again-to-turn-off-tracking" is selected, the press-again-to-turn-off-tracking function is set to ON. In the case where the press-again-to-turn-off-tracking function is set to ON, the tracking function is turned off after the press-and-hold-to-turn-off key is pressed until that key is pressed again.

In the case where the item "press-and-hold-to-turn-off-tracking/face" is selected, the press-and-hold-to-turn-off-tracking-and-face/eye-priority-in-AF function is set to ON. In the case where the press-and-hold-to-turn-off-tracking-and-face/eye-priority-in-AF function is set to ON, the tracking function and the face/eye-priority-in-AF function are turned off while the press-and-hold-to-turn-off key is pressed and held down.

In the case where the item "press-again-to-turn-off-tracking/face" is selected, the press-again-to-turn-off-tracking-and-face/eye-priority-in-AF function is set to ON. In the case where the press-again-to-turn-off-tracking-and-face/eye-priority-in-AF function is set to ON, the tracking function and the face/eye-priority-in-AF function are turned off after the press-and-hold-to-turn-off key is pressed until that key is pressed again.

In the case where the item "press-and-hold-to-turn-off-face" is selected, the press-and-hold-to-turn-off-face/eye-priority-in-AF function is set to ON. In the case where the press-and-hold-to-turn-off-face/eye-priority-in-AF function is set to ON, the face/eye-priority-in-AF function is turned off while the press-and-hold-to-turn-off key is pressed and held down.

In the case where the item "press-again-to-turn-off-face" is selected, the press-again-to-turn-off-face/eye-priority-in-AF function is set to ON. In the case where the press-again-to-turn-off-face/eye-priority-in-AF function is set to ON, the face/eye-priority-in-AF function is turned off after the press-and-hold-to-turn-off key is pressed until that key is pressed again.

The setting screen in FIG. 11 permits individual setting of the method for operating the press-and-hold-to-turn-off function and of the turn-off function.

Specifically, radio buttons for selecting one of two optional items "press and hold" and "press again" are displayed. If the "press and hold" option is selected, the press-and-hold-to-turn-off function is performed while the press-and-hold-to-turn-off key is pressed and held down. On the other hand, if the "press again" option is selected, the press-and-hold-to-turn-off function is performed after the press-and-hold-to-turn-off key is pressed until that key is pressed again.

Also displayed are check boxes for selecting either or both of two options "turn-off-tracking" and "turn-off-face/eye-priority." If the "turn-off-tracking" option is selected, the tracking function is turned off while the press-and-hold-to-turn-off function is being performed. If the "turn-off-face/eye-priority" option is selected, the face/eye-priority-in-AF function is turned off while the press-and-hold-to-turn-off function is being performed.

Incidentally, in the case where the imaging apparatus 1 is provided with a face-priority-in-AF function or an eye-priority-in-AF function instead of the face/eye-priority-in-AF function, the above-described feature temporarily turns off the face-priority-in-AF function or the eye-priority-in-AF function. Incidentally, the face-priority-in-AF function is a function that prioritizes bringing a face into focus in the focus area. The eye-priority-in-AF function is a function that prioritizes bringing an eye into focus in the focus area.

### <Examples of Use of Press-and-Hold-to-Turn-Off-Tracking-and-Face/Eye-Priority-in-AF Function>

Explained below with reference to FIGS. 12 through 14 are examples of use of the press-and-hold-to-turn-off-tracking-and-face/eye-priority-in-AF function.

Incidentally, for the examples in FIGS. 12 through 14, it is assumed that the focus area is set to flexible spot and that the tracking function is set to ON. It is also assumed that the press-and-hold-to-turn-off-tracking-and-face/eye-priority-in-AF function is set to ON.

For example, FIG. 12 depicts an example of imaging a boxing match between boxers 101 and 102.

For example, View A in FIG. 12 displays the focus frame Fb overlaid on the position of the face of the boxer 101, the focus frame Fb tracking the face of the boxer 101.

At this time, in the case where the face of the boxer 101 is hidden as seen in View B in FIG. 12, for example, the focus control section 34 cannot track the face of the boxer 101. As a result, a position different from that of the face of the boxer 101 is brought into focus, and the focus frame Fb is displayed at that position.

In response, if the user presses the press-and-hold-to-turn-off key, for example, the tracking function and the face/eye-priority-in-AF function are temporarily turned off. This allows AF to be performed inside the focus area frame, so that the subject in the focus area frame is brought into focus. Thus, during tracking, the user may set the focus area frame Fa to the position indicated in View C in DIG. 12 so as to again bring the face of the boxer 101 into focus quickly.

When the user stops pressing the press-and-hold-to-turn-off key, the tracking function and the face/eye-priority-in-AF function are resumed. This quickly resumes tracking of the face of the boxer 101.

FIG. 13 depicts an example of imaging a sumo wrestling match between sumo wrestlers 121 and 122.

For example, View A in FIG. 13 displays the focus frame Fb overlaid on the position of the face of the sumo wrestler 121, the focus frame Fb tracking the face of the sumo wrestler 121.

At this time, depending on the face movement of the sumo wrestler 121, for example, as depicted in View B in FIG. 13, there may be a case where tracking of the face of the sumo wrestler 121 fails and where the face of a spectator 123 positioned close to the face of the sumo wrestler 121 is brought into focus, the face of the spectator 122 being thereafter tracked.

In response, if the user presses the press-and-hold-to-turn-off key, for example, the tracking function and the face/eye-priority-in-AF function are temporarily turned off. This allows AF to be performed in the focus area frame, so that the subject within the focus area frame is brought into focus. Thus, during tracking, the user may set the focus area frame Fa to the position indicated in View C in DIG. 13 so as to again bring the face of the sumo wrestler 121 quickly into focus.

When the user stops pressing the press-and-hold-to-turn-off key, the tracking function and the face/eye-priority-in-AF function are resumed. This quickly resumes tracking of the face of the sumo wrestler 121.

FIG. 14 depicts an example of imaging a running dog 141 in a manner tracking the right eye of the dog 141.

View A in FIG. 14 indicates that tracking of the right eye of the dog 141 fails and that the focus frame Fb is shifted to a position different from that of the right eye of the dog 141. On the other hand, the focus area frame Fa is being placed on the right eye of the dog 141.

In response, if the user presses the press-and-hold-to-turn-off key, for example, the tracking function and the face/eye-priority-in-AF function are temporarily turned off. This causes the focus frame Fb to disappear as seen in View B in FIG. 14, allowing AF to be performed in the focus area frame Fa. This in turn brings the right eye of the dog 141 again into focus quickly, as depicted in View C in FIG. 14.

When the user stops pressing the press-and-hold-to-turn-off key, the tracking function and the face/eye-priority-in-AF function are resumed. This quickly resumes tracking of the right eye of the dog 141.

### <Examples of How Focus Standard Key and Press-and-Hold-to-Turn-Off Key Are Assigned>

Explained below are examples of how the focus standard key and the press-and-hold-to-turn-off key are assigned.

For example, the users of the imaging apparatus 1 fall into two types: the user who half-presses the shutter button 52 when performing the AF function, and the user who presses the AF button 53 when executing the AF function.

For example, the user who half-presses the shutter button 52 is expected to press the focus standard key and the press-and-hold-to-turn-off key using the thumb of the right hand. Thus, it is preferred that the focus standard key and the press-and-hold-to-turn-off key be assigned to some of the custom keys except for the custom button 60 at the back of the imaging apparatus 1. In particular, the focus standard key should preferably be assigned to the center of the multi-selector 54.

On the other hand, the user who presses the AF button 53 is expected to press the focus standard key and the press-and-hold-to-turn-off key using the thumb or the index finger of the right hand. Thus, it is preferred that the focus standard key and the press-and-hold-to-turn-off key be assigned to some of the custom keys except for the custom button 60 on the top surface and at the back of the imaging apparatus 1. In particular, the focus standard key should preferably be assigned to the center of the multi-selector 54.

In the manner described above, the user can move the tracking start position not only before tracking but during tracking. As a result, at the end of tracking following tracking failure, for example, tracking can be resumed quickly from an appropriate position. That is, it is possible quickly to resume tracking of the desired tracking target.

### <<2. Modification>>

A modification of the above-described present technology are explained below.

The operating methods and the operating members discussed above are only examples of the present technology and may be varied as needed.

The display form of the focus frame indicating the above-described point of focus and tracking position, and the display form of the focus area frame indicating the focus area and the tracking start position are only examples and may be varied as needed. For example, a display form other than the frame may be used. As another example, the display form for indicating the point of focus may be different from the display form for indicating the tracking position. Also, the display form for indicating the focus area may be different from the display form for indicating the tracking position.

The present technology may be applied, for example, to the imaging apparatus whose imaging function is ancillary thereto, such as smartphones, tablet terminals, and mobile phones.

### <<3. Others>>

### <Configuration Example of Computer>

The series of processes described above may be executed either by hardware or by software. In the case where these processes are to be carried out by software, the programs including the software are installed into a suitable computer for execution. Such computers may include those with the software incorporated in their dedicated hardware beforehand, and those such as generalpurpose personal computers or the like capable of executing diverse functions based on various programs installed therein.

Incidentally, the programs executed by the computer may each be processed chronologically, i.e., in the sequence explained in this description, in parallel with other programs, or in otherwise appropriately timed fashion such as when the program is invoked as needed.

Furthermore, the present technology is not limited to the preferred embodiment discussed above and may be implemented in diverse modification so far as they are within the scope of the technology.

For example, the present technology may be implemented as a cloud computing setup in which a single function is processed cooperatively by networked multiple apparatuses on a shared basis.

Also, each of the steps discussed in reference to the above-described flowchart may be executed either by a single apparatus or by multiple apparatuses on a shared basis.

Furthermore, in the case where a single step includes multiple processes, these processes may be executed either by a single apparatus or by multiple apparatuses on a shared basis.

### <Exemplary Combinations of Configured Components>

The present technology may be implemented preferably in the following configurations.

(1) An imaging apparatus including:
   a focus control section configured to control a tracking function of tracking a tracking target and keeping the tracking target in focus; and
   a setting section configured to move a tracking start position during tracking on a basis of a predetermined condition.
(2) The imaging apparatus according to (1), in which the setting section moves the tracking start position during tracking on a basis of an operation of a user.
(3) The imaging apparatus according to (2), in which the setting section moves the tracking start position to a tracking position when a first user operation is performed during tracking.
(4) The imaging apparatus according to (3), in which the setting section moves the tracking start position to the position designated by a second user operation during tracking.
(5) The imaging apparatus according to (3) or (4), in which the setting section divides an imaging range into a plurality of zones and moves the tracking start position to the zone that includes the tracking position when the first user operation is performed.
(6) The imaging apparatus according to (2), in which the setting section moves the tracking start position to a position designated by the user during tracking.
(7) The imaging apparatus according to any one of (1) to (6), in which the setting section moves the tracking start position to a tracking position at an end of tracking.
(8) The imaging apparatus according to (7), in which the setting section divides an imaging range into a plurality of zones and moves the tracking start position to the zone that includes the tracking position at the end of tracking.
(9) The imaging apparatus according to (7) or (8), further including:
   a recognition section configured to perform a process of recognizing a subject,
   in which the setting section controls movement of the tracking start position at the end of tracking on a basis of a type of a recognized subject.
(10) The imaging apparatus according to (9), in which the setting section controls movement of the tracking start position at the end of tracking on the basis of at least one of a condition that the subject of a first type is recognized and a condition that the subject of a second type is not recognized.
(11) The imaging apparatus according to (10), in which the setting section sets the subject of the type selected by the user either as the subject of the first type or the subject of the second type.
(12) The imaging apparatus according to any one of (1) to (11), further including:
   a display control section configured to control display of the tracking start position overlaid on a through-image.
(13) The imaging apparatus according to (12), in which the display control section changes a display form of the tracking start position before and during tracking.
(14) The imaging apparatus according to (12), in which the display control section stops displaying the tracking start position during tracking and displays the tracking start position upon movement thereof.
(15) The imaging apparatus according to any one of (1) to (14), in which the focus control section sets a position from which to resume tracking at the end of tracking in reference to the tracking start position.
(16) The imaging apparatus according to any one of (1) to (15), in which the setting section temporarily turns off during tracking at least one of the tracking function and a priority auto-fucus function of prioritizing bringing at least one of a face or an eye into focus on a basis of an operation of a user.
(17) An imaging control method including:
   controlling a tracking function of tracking a tracking target and keeping the tracking target in focus; and
   moving a tracking start position during tracking on a basis of a predetermined condition.
(18) A program for causing a computer to execute:
   controlling a tracking function of tracking a tracking target and keeping the tracking target in focus; and
   moving a tracking start position during tracking on a basis of a predetermined condition.

Incidentally, the advantageous effects stated in this description are only examples and not limitative of the present technology that may provide other advantages as well.

### [Reference Signs List]

- 1:: Imaging apparatus
- 11:: Processor
- 13:: Imaging element
- 14:: Operation section
- 16:: Display section
- 32:: Recognition section
- 33:: Setting section
- 34:: Focus control section
- 35:: Imaging control section
- 37:: Display control section
- 51:: Monitor
- 52:: Shutter button
- 53:: AF button
- 54:: Multi-selector

## Claims

1. An imaging apparatus comprising:
a focus control section configured to control a tracking function of tracking a tracking target and keeping the tracking target in focus; and
a setting section configured to move a tracking start position during tracking on a basis of a predetermined condition.

2. The imaging apparatus according to claim 1, wherein the setting section moves the tracking start position during tracking on a basis of an operation of a user.

3. The imaging apparatus according to claim 2, wherein the setting section moves the tracking start position to a tracking position when a first user operation is performed during tracking.

4. The imaging apparatus according to claim 3, wherein the setting section moves the tracking start position to the position designated by a second user operation during tracking.

5. The imaging apparatus according to claim 3, wherein the setting section divides an imaging range into a plurality of zones and moves the tracking start position to the zone that includes the tracking position when the first user operation is performed.

6. The imaging apparatus according to claim 2, wherein the setting section moves the tracking start position to a position designated by the user during tracking.

7. The imaging apparatus according to claim 1, wherein the setting section moves the tracking start position to a tracking position at an end of tracking.

8. The imaging apparatus according to claim 7, wherein the setting section divides an imaging range into a plurality of zones and moves the tracking start position to the zone that includes the tracking position at the end of tracking.

9. The imaging apparatus according to claim 7, further comprising:
a recognition section configured to perform a process of recognizing a subject,
wherein the setting section controls movement of the tracking start position at the end of tracking on a basis of a type of a recognized subject.

10. The imaging apparatus according to claim 9, wherein the setting section controls movement of the tracking start position at the end of tracking on a basis of at least one of a condition that the subject of a first type is recognized and a condition that the subject of a second type is not recognized.

11. The imaging apparatus according to claim 10,
wherein the setting section sets the subject of the type selected by the user either as the subject of the first type or the subject of the second type.

12. The imaging apparatus according to claim 1, further comprising:
a display control section configured to control display of the tracking start position overlaid on a through-image.

13. The imaging apparatus according to claim 12, wherein the display control section changes a display form of the tracking start position before and during tracking.

14. The imaging apparatus according to claim 12, wherein the display control section stops displaying the tracking start position during tracking and displays the tracking start position upon movement thereof.

15. The imaging apparatus according to claim 1, wherein the focus control section sets a position from which to resume tracking at the end of tracking in reference to the tracking start position.

16. The imaging apparatus according to claim 1, wherein the setting section temporarily turns off during tracking at least one of the tracking function and a priority auto-fucus function of prioritizing bringing at least one of a face or an eye into focus on a basis of an operation of a user.

17. An imaging control method comprising:
controlling a tracking function of tracking a tracking target and keeping the tracking target in focus; and
moving a tracking start position during tracking on a basis of a predetermined condition.

18. A program for causing a computer to execute:
controlling a tracking function of tracking a tracking target and keeping the tracking target in focus; and
moving a tracking start position during tracking on a basis of a predetermined condition.
